# EUROPÄISCHE PATENTSCHRIFT

(11) **EP 4 392 692 B1**
(45) Veröffentlichungstag und Bekanntmachung des Hinweises auf die Patenterteilung: **04.12.2024**
(21) Anmeldenummer: 22769176.3
(22) Anmeldetag: 24.08.2022
(51) Int. Cl.: F16J 15/02, F16J 15/06, F16J 15/16

(54) **NABENKAPPENSYSTEM UND FAHRZEUG**
HUB CAP SYSTEM AND VEHICLE
SYSTÈME D'ENJOLIVEUR DE ROUE ET VÉHICULE

(30) Priorität: 26.08.2021 DE 102021122136
(43) Veröffentlichungstag der Anmeldung: 03.07.2024
(73) Patentinhaber: SAF-HOLLAND GmbH, 63856 Bessenbach (DE)
(72) Erfinder: STEGMANN, Rainer, 63768 Hösbach (DE); ARPACI, Muhammet, 63743 Aschaffenburg (DE); KATZKE, André, 63879 Weibersbrunn (DE); WEBER, Elmar, 48249 Dülmen (DE); SCHÄFERS, Simon, 61130 Nidderau-Erbstadt (DE); MÜLLER, Daniel, 63741 Aschaffenburg (DE)
(74) Vertreter: Müller Schupfner & Partner Patent- und Rechtsanwaltspartnerschaft mbB (Muc)
(86) Internationale Anmeldenummer: PCT/EP2022/073589
(87) Internationale Veröffentlichungsnummer: WO 2023/025850

(56) Entgegenhaltungen:
- EP-A1- 1 489 320
- CN-A- 110 630 743
- CN-U- 201 795 048
- DE-A1- 102017 113 391
- DE-A1- 2 731 886

## Beschreibung

Die Erfindung betrifft einen Dichtring, ein Nabenkappensystem zur Befestigung an einer Radnabe eines Fahrzeugs, ein Radkappensystem umfassend eine Radnabe und ein Nabenkappensystem sowie ein Fahrzeug, insbesondere Nutzfahrzeug. Nabenkappensysteme haben unter anderem die Aufgabe, einen Innenbereich eines Rads und/oder einer Radnabe vor dem Eindringen von Fremdkörpern bzw. Teilchen und/oder Flüssigkeiten, z.B. Schmutz oder Feuchtigkeit, zu schützen. Um eine bessere Abdichtwirkung zu erzielen, ist es aus dem Stand der Technik bekannt, zwischen der Nabenkappe und der Radnabe Dichtringe vorzusehen, um eine Abdichtung gegen ein Eindringen von Fremdkörpern zu verbessern. Sind die Räder mit einem Reifendruckregulierungssystem versehen, so kann die erzielte Dichtwirkung jedoch potenziell ungünstig sein, wenn, beispielsweise bedingt durch Leckage in den Zuleitungen des Reifendruckregulierungssystems, Druckluft in die Radnabe gelangt. Bei einem nach außen abgedichteten Innenraum der Radnabe kann dies zum Aufbau von Überdruck führen, wodurch wiederum Schäden an dem Nabensystem auftreten können oder gar die Nabenkappe verloren oder abgelöst wird.

Die EP 1 489 320 A1 beschreibt ein Lager zum Tragen eines Rades mit einem Dichtring, der drei Dichtlippen aufweist, nach dem Oberbegriff des Anspruchs 1.

Die DE 10 2017 113 391 A1 beschreibt eine Dichtungsanordnung zur Abdichtung eines Raumes zwischen zwei Maschinenelementen mit einem Laufring, welcher eine Dichtlippe aufweist, die sich in eine Primärdichtlippe und eine Kraftlippe aufteilt.

Die CN 201 795 048 U beschreibt eine Dichtstruktur für eine Staubabdeckung und ein Lager. Ein Dichtkörper weist zumindest zwei Dichtlippen auf.

Die DE 27 31 886 A1 offenbart einen Verschluss für einen Füllstutzen eines Kraftstoffbehälters. Dabei ist ein Dichtungsring aus einem elastischen Material mit Lippen vorgesehen.

Die CN 110 630 743 A offenbart eine Dichtvorrichtung für einen Windturbinengenerator mit einem bewegbaren Dichtring.

Es ist daher eine Aufgabe der Erfindung, einen Dichtring sowie ein entsprechendes Nabenkappensystem bereitzustellen, mit denen bei ausreichender Abdichtung gegen das Eindringen von Schmutz oder Feuchtigkeit ein Druckausgleich des Innenraumdrucks in der Radnabe auf einfache Weise möglich ist und die eine möglichst einfache und kostengünstige Montage ermöglichen.

Diese Aufgabe wird gelöst durch ein Nabenkappensystem gemäß der Ansprüche 1-11, ein Radkappensystem gemäß Anspruch 12 und ein Fahrzeug gemäß Anspruch 13. Weitere Vorteile und Merkmale ergeben sich aus den jeweiligen abhängigen Ansprüchen sowie aus der Beschreibung und den Figuren.

Erfindungsgemäß ist ein Dichtring umfassend einen Haltebereich, eine Primärdichtlippe und eine Sekundärdichtlippe, wobei der Haltebereich umlaufend um eine Axialrichtung ausgebildet ist, wobei eine Radialrichtung sich radial und senkrecht von der Axialrichtung weg erstreckt, wobei die Primärdichtlippe und die Sekundärdichtlippe eine Erstreckung in Radialrichtung, insbesondere in positive Radialrichtung, aufweisen. Die Axialrichtung bezeichnet insbesondere eine zu der durch den Dichtring aufgespannten Fläche senkrechte Richtung. Die Axialrichtung bzw. die Mittelachse verläuft bevorzugt durch den Mittelpunkt des Dichtrings. Die Radialrichtung verläuft insbesondere von dem Mittelpunkt bzw. der Mittelachse des Dichtrings radial nach außen und/oder senkrecht zu der Axialrichtung. Dabei kann unter einer positiven Radialrichtung eine Richtung, welche von dem Mittelpunkt bzw. der Mitteachse des Dichtrings radial nach außen verläuft, verstanden werden, während unter einer negativen Radialrichtung eine Richtung verstanden werden kann, die von außen radial zum Mittelpunkt bzw. zu der Mittelachse des Dichtrings zeigt. Der Dichtring kann einen im Wesentlichen konstanten Querschnitt und/oder einen überwiegend bzw. abschnittsweise konstanten Querschnitt aufweisen, insbesondere in einer Richtung quer zu der Axialrichtung und quer zu der Radialrichtung. Im Wesentlichen konstant bedeutet dabei in diesem Kontext insbesondere, dass der Dichtring abgesehen von konstruktionsbedingten Abweichungen einen konstanten Querschnitt aufweist. Überwiegend bzw. abschnittsweise konstant kann bedeuten, dass der Dichtring einen im Wesentlichen konstanten Querschnitt aufweist, jedoch stellenweise von diesem konstanten Querschnitt abweicht, z.B. durch zumindest einen Durchbruch. Vorteilhafterweise kann der Dichtring einstückig ausgebildet sein. Eine einstückige Ausbildung kann eine besonders sichere Dichtwirkung ermöglichen und ggf. Montagefehler durch fehlerhaftes Zusammensetzen verhindern. Beispielsweise kann der Dichtring an dem Ort seines vorgesehenen Einsatzes elastisch aufziehbar sein. Der Dichtring weist einen Haltebereich auf, wobei der Haltebereich insbesondere einen Anlagebereich des Dichtrings, z.B. an eine Nabenkappe und/oder an eine Radnabe, umfasst und/oder zur Anlage an z.B. eine Nabenkappe und/oder an eine Radnabe ausgebildet ist. Besonders bevorzugt ist der Dichtring dazu ausgestaltet, dass er für eine Nabenkappe bzw. ein Nabenkappensystem verwendet werden kann. Der Haltebereich kann ein Grundkörper, welcher den überwiegenden Teil der Masse und/oder des Volumens des Dichtrings ausmacht, sein. Der Haltebereich kann einen ungefähr rechteckigen Querschnitt aufweisen, und/oder wobei beispielsweise die Ecken des Haltebereichs abgerundet sein können und/oder wobei der Haltebereich an einer Seite, an der die Primärdichtlippe und/oder die Sekundärdichtlippe angeordnet oder ausgebildet ist/sind und/oder an den Haltebereich anschließen, von der rechteckigen Querschnittsform abweichen kann. Der Haltebereich und/oder der Dichtring kann Aussparungen, Vertiefungen und/oder Durchbrüche oder Durchbohrungen umfassen, welche insbesondere der Leitung und/oder dem Aufenthalt von Luft dienen können. Der Haltebereich ist umlaufend um eine Axialrichtung und/oder um eine Mittelachse des Dichtrings angeordnet. Die Primärdichtlippe und/oder die Sekundärdichtlippe kann an den Haltebereich anschließen. Alternativ kann die Primärdichtlippe und/oder die Sekundärdichtlippe von dem Haltebereich beabstandet sein. Beispielsweise kann ein Übergangsbereich zwischen dem Haltebereich sowie der Primärdichtlippe und/oder der Sekundärdichtlippe vorgesehen sein. Die Primärdichtlippe und/oder die Sekundärdichtlippe kann vorzugsweise elastisch ausgebildet sein. Zweckmäßigerweise ist der Haltebereich, die Sekundärdichtlippe und/oder die Primärdichtlippe aus dem gleichen Werkstoff ausgebildet. Vorteilhafterweise ist der Haltebereich stofflich mit der Primärdichtlippe und/oder der Sekundärdichtlippe verbunden, wobei hierdurch eine besonders hohe mechanische Belastbarkeit und Dichtwirkung erreicht werden kann. Eine angegebene Erstreckung der Primärdichtlippe und der Sekundärdichtlippe kann sich insbesondere auf einen entspannten, d.h. insbesondere nicht elastisch verformten Zustand der Dichtlippen beziehen. Eine Erstreckung der Primärdichtlippe und/oder der Sekundärdichtlippe bezieht sich insbesondere auf eine Erstreckung entlang der Haupterstreckung bzw. der längsten Erstreckung der jeweiligen Dichtlippe. Vorzugsweise ist die Erstreckung der Primärdichtlippe und/oder der Sekundärdichtlippe derart zu verstehen, dass sie sich auf die Orientierung der Primärdichtlippe und/oder der Sekundärdichtlippe bezieht. Insbesondere kann die Erstreckung einer Längserstreckung entsprechen. Dabei ist die Längserstreckung insbesondere diejenige Erstreckung, entlang derer die Dichtlippe ihre größte Erstreckung bzw. Ausdehnung aufweist. Die Primärdichtlippe und/oder die Sekundärdichtlippe kann sich anteilig noch in eine weitere Richtung zusätzlich zu der Radialrichtung erstrecken, z.B. in Axialrichtung. Die Erstreckung der Primärdichtlippe und/oder der Sekundärdichtlippe weist demnach zumindest eine Komponente in Radialrichtung auf. Optional kann die Erstreckung der Primärdichtlippe und/oder der Sekundärdichtlippe eine weitere Komponente in eine andere Richtung aufweisen. Beispielsweise kann die Primärdichtlippe und/oder die Sekundärdichtlippe sich schräg zu der Radialrichtung erstrecken. Eine Richtung der Erstreckung der Primärdichtlippe und/oder der Sekundärdichtlippe wird dabei insbesondere von ihrem Ansatz an den sonstigen Bestandteilen des Dichtrings, insbesondere dem Haltebereich, bis zu ihrem distalen Ende bemessen bzw. definiert. Eine Erstreckung in positiver Richtung kann bedeuten, dass sich die Primärdichtlippe und/oder die Sekundärdichtlippe von ihrem Ansatz an dem Dichtring radial nach außen von dem Mittelpunkt des Dichtrings bzw. der Axialrichtung bzw. der Mittelachse des Dichtrings wegerstreckt. Insbesondere kann ein distales Ende der Primärdichtlippe und/oder der Sekundärdichtlippe weiter von dem Mittelpunkt des Dichtrings bzw. der Axialrichtung entfernt sein, als der Ansatz der Primärdichtlippe und/oder der Sekundärdichtlippe. Die Primärdichtlippe kann das distale Ende des Dichtrings in einer ersten Richtung, insbesondere in Radialrichtung, darstellen, und/oder die Sekundärdichtlippe kann das Ende des Dichtrings in einer zweiten Richtung, insbesondere in einer zu der ersten Richtung im Wesentlichen senkrechten, vorzugsweise zu der Axialrichtung parallelen Richtung, darstellen und/oder sich bis zu dem Ende des Dichtrings in der zweiten Richtung erstrecken. Beispielsweise kann die Primärdichtlippe dazu ausgestaltet sein, das Eindringen von Fremdkörpern, insbesondere von Schmutz und/oder Wasser, in einen Innenraum, z.B. einer Radnabe und/oder eines Rads, zu verhindern. Die Sekundärdichtlippe kann dazu ausgebildet sein, insbesondere bei einem Druck in dem Innenraum, welcher unterhalb eines vorbestimmten Schwellendrucks liegt, das Eindringen von Fremdkörpern, insbesondere von Schmutz und/oder Wasser, in den Innenraum zu verhindern. Darüber hinaus kann die Sekundärdichtlippe dazu ausgebildet sein, bei einem Überdruck in dem Innenraum oberhalb des vorbestimmten Schwellendrucks, durch flexibles Zurückbiegen einen Druckablass zu ermöglichen. Das Zurückbiegen der Sekundärdichtlippe kann insbesondere durch den Druck in dem Innenraum bedingbar sein. Mit anderen Worten kann die Sekundärdichtlippe dazu ausgebildet sein, bei Normaldruck eine Abdichtung zu bewirken und bei Überschreiten eines Druckschwellenwerts einen Überdruckausgleich durch flexibles Zurückbiegen zu ermöglichen. Die Abdichtwirkung der Primärdichtlippe und/oder der Sekundärdichtlippe kann insbesondere durch Anliegen der Primärdichtlippe und/oder der Sekundärdichtlippe an einer Fläche, z.B. einer Nabenkappe und/oder einer Radnabe, erzielbar sein. Vorteilhafterweise kann der erfindungsgemäße Dichtring z.B. dazu einsetzbar sein, einerseits ein Eindringen von Schmutz und/oder Wasser zu verhindern, insbesondere durch die Primärdichtlippe, und andererseits, falls erforderlich, eine Entlüftung eines Überdrucks, z.B. eines Leckagedrucks, aus einem Innenraum, insbesondere durch die Sekundärdichtlippe, zu ermöglichen.

Vorteilhafterweise kann die Primärdichtlippe und/oder die Sekundärdichtlippe sich vom Haltebereich aus erstrecken. Mit anderen Worten kann die Primärdichtlippe und/oder die Sekundärdichtlippe direkt an den Haltebereich anschließen. Dies kann eine besonders einfache und kompakte Bauweise des Dichtrings bedingen.

Vorteilhafterweise kann die Primärdichtlippe und/oder die Sekundärdichtlippe und/oder der Haltebereich und/oder der Dichtring aus Gummi und/oder aus einem Kunststoff, insbesondere zu einem überwiegenden Teil, ausgebildet sein. Vorteilhafterweise kann der Dichtring vollständig aus Gummi und/oder aus einem Kunststoff ausgebildet sein. Zu einem überwiegenden Teil kann hierbei bedeuten, dass der Dichtring z.B. eine, insbesondere äußere, Schutzschicht und/oder einen Einschluss und/oder einen äußeren Zusatz aus einem anderen Material umfasst. Alternativ oder zusätzlich kann der Dichtring eine Beimischung aus einem anderen Material umfassen. Zu einem überwiegenden Teil kann insbesondere bedeuten, dass der Dichtring zu mehr als 50 Prozent, bevorzugt zu mehr als 80 Prozent, aus Gummi und/oder aus einem Kunststoff ausgebildet ist. Bei einer Beigabe anderer Materialien, sodass der Dichtring zu über 50 Prozent aus Gummi und/oder aus einem Kunststoff besteht kann der Dichtring eine besonders gute Stabilität und/oder einen besonders guten Schutz vor Umwelteinflüssen aufweisen. Eine Ausbildung aus über 80 Prozent Gummi und/oder aus einem Kunststoff kann eine besonders gute Elastizität und/oder Dichtigkeit des Dichtrings ermöglichen. Eine vollständige Ausbildung aus Gummi und/oder aus einem Kunststoff kann darüber hinaus eine relativ preiswerte und/oder einfache Herstellung ermöglichen.

Vorteilhafterweise kann zwischen der Sekundärdichtlippe und dem Haltebereich ein Aufnahmeraum vorgesehen sein, wobei der Aufnahmeraum insbesondere rotationssymmetrisch um die Axialrichtung umlaufend ausgebildet ist. Der Aufnahmeraum kann vorzugsweise eine Aussparung oder ein Rücksprung sein, insbesondere an einer Seite des Dichtrings, deren Normale in Axialrichtung verläuft. Die Aussparung bzw. der Rücksprung kann dazu ausgebildet sein, zusammen mit der Sekundärdichtlippe und mit einer Fläche, an der die Sekundärdichtlippe im installierten Zustand anliegt bzw. an der die Sekundärdichtlippe bei Normaldruck anliegt, einen nach außen abgeschlossenen Raum auszubilden, wobei der Raum eine Verbindung in einen durch den Dichtring abgedichteten Innenraum aufweisen kann. Der Aufnahmeraum bzw. die Aussparung bzw. der Rücksprung kann in einer Richtung quer zu der Axialrichtung und quer zu der Radialrichtung ein rundes, insbesondere halbkreisförmiges, Querschnittsprofil aufweisen. Der Aufnahmeraum kann insbesondere zumindest abschnittsweise, bevorzugt vollständig, an die Erstreckung der Sekundärdichtlippe angrenzen. Durch das Volumen des Aufnahmeraums kann insbesondere erzielt werden, dass der Druck möglichst gleichmäßig, insbesondere in Umlaufrichtung des Dichtrings gesehen, auf die Sekundärdichtlippe wirkt. Zusätzlich oder alternativ kann ermöglicht werden, dass der Druck auf die gesamte Erstreckung der Sekundärdichtlippe oder zumindest auf einen Großteil der Erstreckung der Sekundärdichtlippe wirkt. Vorteilhafterweise kann der Aufnahmeraum insbesondere eine besonders zuverlässige Druckausgleichsfunktion der Sekundärdichtlippe ermöglichen. Eine, insbesondere rotationssymmetrische, Ausbildung umlaufend um den Dichtring kann darüber hinaus eine besonders einfache Fertigung bedingen.

Vorteilhafterweise kann die Primärdichtlippe die Sekundärdichtlippe in Radialrichtung überragen. Mit Vorteil kann die Sekundärdichtlippe somit radial außen bzw. an einem distalen Ende in positiver Radialrichtung eine Abdichtung bewirken. Beispielsweise kann der Dichtring für eine Nabenkappe, welche einen Montagebereich und/oder sich in Axialrichtung erstreckende Einrastelemente zum Eingreifen in eine Radnabe aufweist, verwendet werden, indem der Dichtring in Radialrichtung zwischen einem äußeren Teil der Radnabe und dem Montagebereich bzw. den Einrastelementen angeordnet ist. Damit kann die Primärdichtlippe durch ihre radiale Position einen Innenraum der Radnabe bzw. des Rads abdichten. Die Sekundärdichtlippe kann hingegen die Funktion eines Druckablassventils mittels einer elastischen Ausgestaltung übernehmen.

Vorteilhafterweise kann/können die Primärdichtlippe und/oder die Sekundärdichtlippe sich in Axialrichtung und in die Radialrichtung erstrecken. Mit anderen Worten kann/können die Primärdichtlippe und/oder die Sekundärdichtlippe sich schräg zu der Axialrichtung und zu der Radialrichtung erstrecken. Diese Art der Erstreckung kann es für die Primärdichtlippe ermöglichen, dass sie besonders gut abdichtend an einer Fläche, z.B. einer Radnabe, anliegen kann. Die Sekundärdichtlippe kann durch diese Art der Erstreckung besonders gut für das Ablassen von Überdruck eingesetzt werden, insbesondere wenn sie an einer Fläche anliegt, deren Normale parallel zu der Axialrichtung verläuft, wobei sie unterhalb eines vorbestimmten Druckwerts abdichtend an der Fläche anliegen kann. Vorteilhafterweise kann die Primärdichtlippe und/oder die Sekundärdichtlippe sich im Wesentlichen gleichermaßen in Axialrichtung und in Radialrichtung erstrecken, wobei "im Wesentlichen" eine Abweichung von maximal 10 Prozent von einer gleichartigen Erstreckung in diese beiden Richtungen bedeuten kann. Es hat sich herausgestellt, dass eine derartige gleichmäßige Ausgestaltung einerseits eine besonders gute Abdichtwirkung erzielen kann und andererseits ein Öffnen eines Entlüftungswegs durch elastisches Verbiegen der Sekundärdichtlippe mit einer nur geringen Verbiegung, insbesondere geringer im Vergleich mit einer nicht schrägen Ausrichtung, erzielt werden kann.

Vorteilhafterweise kann es vorgesehen sein, dass die Primärdichtlippe und die Sekundärdichtlippe gleichgerichtet erstreckend ausgebildet sind. Mit anderen Worten können die Haupterstreckungsrichtungen der Primärdichtlippe und der Sekundärdichtlippe parallel zueinander ausgerichtet sein. Dies kann eine besonders einfache und gleichzeitige für eine Abdichtung effektive Ausführungsform darstellen.

Vorteilhafterweise kann der Haltebereich eine Bodenfläche aufweisen, wobei die Bodenfläche vorzugsweise koaxial zur Axialrichtung und/oder vorzugsweise der Mittelachse des Dichtrings zugewandt ist, wobei in der Bodenfläche vorteilhafterweise ein um die Axialrichtung umlaufender Kanal ausgebildet sein kann. Der Kanal kann vorzugsweise im Querschnitt halbkreisförmig ausgebildet sein und/oder einen entlang seines Verlaufs im Wesentlichen konstanten Querschnitt aufweisen. Die Bodenfläche kann gegenüberliegend der Seite des Dichtrings oder des Haltebereichs ausgebildet oder angeordnet sein, an die die Primärdichtlippe anschließt und/oder an die die Sekundärdichtlippe anschließt. Der Kanal kann vorteilhafterweise die Montage des Dichtrings erleichtern und/oder die Dichtwirkung des Dichtrings erhöhen. Der Kanal kann insbesondere dazu ausgelegt sein, mit einem durch den Dichtring abzudichtenden Innenraum in Fluidkontakt zu sein. Vorteilhafterweise kann die Luft in dem Kanal geführt werden und insbesondere von dem Kanal zu der Sekundärdichtlippe geleitet werden. Der Kanal kann somit eine besonders gleichmäßige und zuverlässige Entlüftung ermöglichen.

Vorteilhafterweise kann der Dichtring einen Durchbruch aufweisen. Der Durchbruch kann insbesondere dazu ausgebildet sein, einen Entlüftungsweg bzw. einen Luftweg von einem durch den Dichtring abgedichteten Innenraum zu der Sekundärdichtlippe bereitzustellen. Der Durchbruch kann zylinderförmig ausgebildet sein. Der Dichtring kann vorzugsweise mehrere Durchbrüche aufweisen, wobei die Durchbrüche insbesondere umlaufend gleichmäßig an dem Dichtring verteilt sind. Mit Vorteil kann der Durchbruch der Verbindung eines abgedichteten Innenraums mit der Sekundärdichtlippe und/oder eines Bereichs neben der Sekundärdichtlippe dienen.

Vorteilhafterweise kann der Durchbruch in die Bodenfläche und/oder den Kanal münden. Der Durchbruch kann so, insbesondere im Zusammenspiel mit dem Kanal, einer gezielten Leitung der Luft dienen, insbesondere um bei Überdruck in dem abgedichteten Innenraum einen Entlüftungsweg bereitzustellen.

Vorteilhafterweise kann der Durchbruch in den Aufnahmeraum münden. Der Durchbruch kann eine Fluidverbindung von dem Innenraum zu dem Aufnahmeraum ermöglichen. Mit Vorteil kann in diesem Fall der Aufnahmeraum eine gleichmäßige Verteilung der ggf. unter Druck stehenden Luft ermöglichen. Bei einem Überdruck, kann die Sekundärdichtlippe zur Freigabe eines Entlüftungswegs automatisch elastisch zurückbiegbar sein, wobei insbesondere durch die gleichmäßige Verteilung mittels des Aufnahmeraums die Freigabe zuverlässig einstellbar sein kann. Der so gestaltete Durchbruch kann damit eine Möglichkeit darstellen, durch den Dichtring selbst einen Entlüftungsweg bereitzustellen. Da es sich vorzugsweise nur um einen einzelnen Durchbruch bzw. nur um einige Durchbrüche handelt, wird dadurch insbesondere die Stabilität des Dichtrings nicht zu stark beeinträchtigt.

Vorteilhafterweise kann der Durchbruch sich in Axialrichtung und/oder in Radialrichtung erstrecken. Eine Erstreckung in Axialrichtung und in Radialrichtung kann vorteilhafterweise ermöglichen, dass beispielsweise Luft aus einem in Axialrichtung und/oder in Radialrichtung gesehen weiter innen gelegenen Bereich des abgedichteten Innenraums an einen in Axialrichtung und in Radialrichtung gesehen äußeren Bereich des Dichtrings geleitet werden kann. Des Weiteren kann eine Übertragung von Druckstößen aus dem Innenraum direkt an die Sekundärdichtlippe verhindert sein, wodurch eine gleichmäßigere Druckregulierung des Innenraums möglich sein kann.

Vorteilhafterweise kann/können die Primärdichtlippe und/oder die Sekundärdichtlippe vollständig um die Axialrichtung herum verlaufend ausgebildet sein. Insbesondere kann ein Querschnitt quer zu der Axialrichtung und der Radialrichtung der Primärdichtlippe und/oder der Sekundärdichtlippe konstant ausgebildet sein. Eine vollständige um die Axialrichtung herum verlaufenden Ausbildung kann eine einfache Fertigung ermöglichen. Zudem kann der Dichtring bzw. die Primärdichtlippe und/oder die Sekundärdichtlippe somit besonders mechanisch belastbar sein. Weiterhin kann durch ein vollständiges herum Verlaufen eine gleichmäßige Abgabe von Überdruck realisierbar sein.

Gemäß einem weiteren Aspekt der Erfindung ist ein Nabenkappensystem zur Befestigung an einer Radnabe eines Fahrzeugs, insbesondere Nutzfahrzeugs, vorgesehen, umfassend eine Nabenkappe und einen Dichtring wie hierin beschrieben. Ein Nutzfahrzeug im Sinne der Erfindung ist insbesondere ein Fahrzeug, welches ein zulässiges Gesamtgewicht von über 3,5 t, bevorzugt von über 7,5 t und besonders bevorzugt von über 18 t aufweist. Das Nutzfahrzeug kann insbesondere ein straßentaugliches und/oder ein straßengebundenes Fahrzeug sein. Bevorzugt kann ein solches Nutzfahrzeug ein Anhänger, insbesondere ein Sattelauflieger, sein. Alle Vorteile und Merkmale des Dichtrings können analog auf das Nabenkappensystem übertragen werden und umgekehrt. Der erfindungsgemäße Dichtring kann für die Entlüftung eines Innenraums der Radnabe bzw. eines Rads bei Überdruck dienen, insbesondere mittels der Sekundärdichtlippe, wobei der Dichtring gleichzeitig einen Schutz des Innenraums vor Schmutz und/oder Wasser bzw. anderen Flüssigkeiten bietet, insbesondere mit Hilfe der Primärdichtlippe und/oder der Sekundärdichtlippe.

Vorteilhafterweise kann die Nabenkappe einen Befestigungsbereich, insbesondere eine Nut, aufweisen, wobei der Befestigungsbereich vorteilhafterweise um die Axialrichtung bzw. Mittelachse des Dichtrings umlaufend ist, und/oder wobei optional der Befestigungsbereich vorteilhafterweise wegweisend von der Axialrichtung bzw. einer Mittelachse des Dichtrings ausgebildet ist, und wobei der Dichtring, insbesondere der Haltebereich des Dichtrings, an oder in dem Befestigungsbereich angeordnet ist. Wegweisend von der Axialrichtung kann dabei insbesondere bedeuten, dass der Befestigungsbereich auf einer in positive Radialrichtung gewandten Seite der Nabenkappe angeordnet ist. Der Befestigungsbereich, insbesondere die Nut, kann vorteilhafterweise der Stabilisierung der Anordnung des Dichtrings dienen bzw. bei der Installation die richtige Anordnung des Dichtrings sicherstellen bzw. erleichtern.

Vorteilhafterweise kann die Nabenkappe einen Innenraum aufweisen oder zumindest teilweise umschließen, wobei die Nabenkappe zumindest einen Verbindungsdurchbruch aufweist, wobei der Verbindungsdurchbruch den Durchbruch, den Kanal oder den Aufnahmeraum mit dem Innenraum verbindet. Der Verbindungsdurchbruch kann insbesondere als Luftdurchführung ausgebildet sein. Vorteilhafterweise kann somit durch den Verbindungsdurchbruch ein Entlüftungsweg vorgegeben werden, welcher bei elastischem Zurückbiegen der Sekundärlippe bei Überdruck in den Innenraum freigegeben wird. Bei einem Überdruck kann die Luft gezielt durch diesen Entlüftungsweg, d.h. durch den Verbindungsdurchbruch und - soweit vorhanden - optional durch den Durchbruch, den Kanal und/oder den Aufnahmeraum, strömen und somit für Entlüftung bei Überdruck sorgen. Herrscht kein Überdruck bzw. ist ein Druckschwellenwert nicht überschritten, d.h. insbesondere wenn eine Entlüftung nicht nötig ist, ist durch die Sekundärschutzlippe der Schutz des Innenraums gewährleistet.

Zweckmäßigerweise kann die Sekundärdichtlippe an der Nabenkappe anliegen oder anlegbar sein. Dies stellt somit eine einfache Möglichkeit dar, bei der die Sekundärdichtlippe im angelegten Zustand den Innenraum schützen kann. Insbesondere kann die Sekundärdichtlippe dazu ausgebildet sein, bei Überschreiten eines vorbestimmten Druckwerts in dem Innenraum durch elastisches Wegbiegen von der Nabenkappe einen Entlüftungsweg zum Abbau des Drucks in dem Innenraum freizugeben und unterhalb des vorbestimmten Druckwerts durch Anliegen an der Nabenkappe den Entlüftungsweg zu versperren. Vorzugsweise kann die Sekundärdichtlippe an einer Fläche der Nabenkappe anliegen, wobei die die Normale der Fläche im Wesentlichen parallel zu der Axialrichtung ausgerichtet ist, wobei eine Abweichung von einer parallelen Ausrichtung insbesondere von maximal 10°, bevorzugt von maximal 5° als ein im Wesentlichen parallel verstanden werden kann. Dies stellt eine besonders effiziente Möglichkeit einer Regulierung des Drucks im Innenraum dar, wobei insbesondere die geometrischen Gegebenheiten der Anordnung zwischen Nabenkappe und Dichtring ausgenutzt werden. Vorteilhafterweise kann die Sekundärdichtlippe beim Anliegen derart orientiert sein, dass ein Berührungspunkt der Sekundärdichtlippe mit der Nabenkappe in Radialrichtung gesehen weiter von dem Mittelpunkt der Nabenkappe entfernt und/oder radial weiter außen angeordnet ist als ein Ansatz der Sekundärdichtlippe an dem Dichtring und/oder an dem Haltebereich des Dichtrings. Dies kann insbesondere einen schrägen Verlauf der Sekundärdichtlippe bedingen, was für eine Abdichtung und/oder ein Freigeben eines Entlüftungswegs besonders günstig sein kann.

Vorteilhafterweise kann/können der Dichtring und/oder die Nabenkappe derart ausgebildet sein, dass der auf einer Seite, insbesondere der Axialrichtung zugewandten Seite, der Sekundärdichtlippe anliegende Druck im Wesentlichen dem Druck im Innenraum der Nabenkappe entspricht. In anderen Worten kann ein Fluidfluss von der einen Seite der Sekundärdichtlippe zum Innenraum der Nabenkappe erfolgen, ohne dass das Fluid die Nabenkappe oder den Dichtring dazu verlassen muss bzw. verlässt. Der Druck, welcher auf die Sekundärdichtlippe wirkt, kann somit dem Druck im Innenraum entsprechen, womit eine direkte Kopplung des Verhaltens, insbesondere Öffnen und Schließens, der Sekundärdichtlippe an den Druck im Innenraum möglich ist.

Vorteilhafterweise kann die Nabenkappe Befestigungsmittel, insbesondere Befestigungsfinger, aufweisen zur Festlegung der Nabenkappe an einer Radnabe. Vorzugsweise kann der Dichtring und/oder der Befestigungsbereich im Bereich eines Anschlusses der Befestigungsmittel an die Nabenkappe angeordnet sein. Damit kann insbesondere ein besonders einfaches Verklemmen des Dichtrings und damit ein Abdichten durch den Dichtring erzielbar sein.

Gemäß einem weiteren Aspekt der Erfindung ist ein Radkappensystem umfassend eine Radnabe und ein Nabenkappensystem wie hierin beschrieben vorgesehen, wobei die Primärdichtlippe an der Radnabe anliegt oder anlegbar ist. Alle Vorteile und Merkmale des Dichtrings sowie des Nabenkappensystems können analog auf das Radkappensystem übertragen werden und umgekehrt.

Gemäß einem weiteren Aspekt der Erfindung ist ein Fahrzeug, insbesondere Nutzfahrzeug, vorgesehen umfassend einen Dichtring wie hierin beschrieben, ein Nabenkappensystem wie hierin beschrieben oder ein Radkappensystem wie hierin beschrieben. Alle Vorteile und Merkmale des Dichtrings, des Nabenkappensystems und des Radkappensystems können analog auf das Fahrzeug übertragen werden und umgekehrt.

Einzelne der oben genannten Merkmale und Ausführungsformen können miteinander kombiniert werden und die den einzelnen Merkmalen zugeordneten Vorteile gelten auch für eine Kombination dieser Merkmale.

Weitere Vorteile und Merkmale der Erfindung ergeben sich aus der nachfolgenden Beschreibung bevorzugter Ausführungsformen des erfindungsgemäßen Gegenstands mit Bezug auf die beigefügten Figuren. Die folgende Beschreibung dient lediglich der Verdeutlichung der Erfindung und sollte nicht derart aufgefasst werden, dass durch sie die beiliegenden Ansprüche auf eine der Ausführungsformen beschränkt werden. Es zeigen
- **Fig. 1**: eine Schnittansicht eines Nabenkappensystems gemäß einer Ausführungsform der Erfindung,
- **Fig. 2**: eine Schnittansicht eines Dichtrings, der an einer Nabenkappe angeordnet ist, gemäß einer ersten Ausführungsform der Erfindung,
- **Fig. 3**: eine vergrößerte Schnittansicht eines Dichtrings, der an einer Nabenkappe angeordnet ist, gemäß einer ersten Ausführungsform der Erfindung,
- **Fig. 4**: eine Schnittansicht eines Dichtrings, der an einer Nabenkappe angeordnet ist, gemäß einer zweiten Ausführungsform der Erfindung,
- **Fig. 5**: eine vergrößerte Schnittansicht eines Dichtrings, der an einer Nabenkappe angeordnet ist, gemäß einer zweiten Ausführungsform der Erfindung und
- **Fig. 6**: eine schematische Seitenansicht eines Fahrzeugs gemäß einer Ausführungsform.

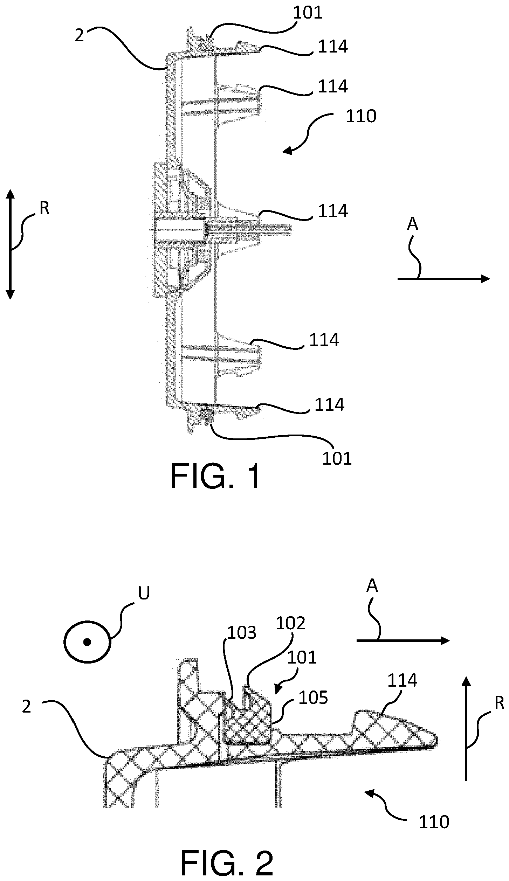

**Figur 1** zeigt eine Schnittansicht eines Nabenkappensystems mit einem Dichtring 101 und einer Nabenkappe 2 gemäß einer Ausführungsform der Erfindung. Der Dichtring 101 ist umlaufend um die Nabenkappe 2 angeordnet und hier wie auch in den folgenden Figuren im Querschnitt gezeigt. Die Nabenkappe 2 umfasst mehrere Befestigungsmittel 114 zum Verklemmen mit einer Radnabe. Durch Aufsetzen der Nabenkappe 2 auf die Radnabe kann ein Innenraum 110 gebildet werden, der mit Hilfe des Dichtrings 101 nach außen hin abgedichtet werden kann.

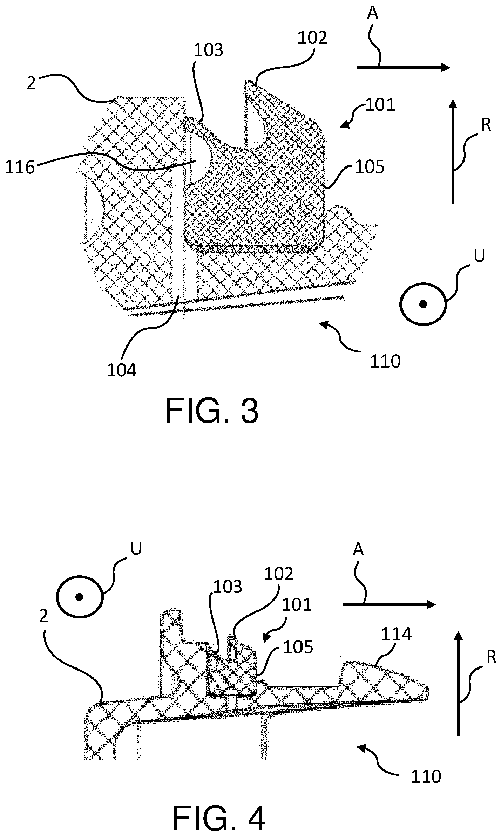

Die **Figuren 2** **und** **3** zeigen eine Schnittansicht eines Dichtrings 101, der an einer Nabenkappe 2 angeordnet ist, welche hier ausschnittsweise gezeigt ist, gemäß einer ersten Ausführungsform der Erfindung. Der Dichtring 101 umfasst eine Primärdichtlippe 102 zur Anlage an einer Radnabe und eine Sekundärdichtlippe 103, welche an der Nabenkappe 2 anliegt. Sowohl die Primärdichtlippe 102 als auch die Sekundärdichtlippe 103 schließen an den Haltebereich 105 des Dichtrings 101 an und erstrecken sich von dort sowohl in Axialrichtung A als auch in Radialrichtung R. Der Haltebereich 105 stellt in dieser Ausführungsform den Hauptteil des Dichtrings 101 dar und ist in einer Nut bzw. an einem Befestigungsbereich der Nabenkappe 2 angeordnet. Unterhalb der Primärdichtlippe 103 und eingeschlossen durch die Primärdichtlippe 103, den Haltebereich 105 und eine Seitenwand der Radnabe 2 ist ein Aufnahmeraum 116 angeordnet. Der Aufnahmeraum 116 ist mittels eines Verbindungsdurchbruchs 104 durch die Nabenkappe 2 mit dem durch die Nabenkappe 2 und eine Radnabe gebildeten Innenraum 110 fluidisch verbunden. Durch den Verbindungsdurchbruch 104 wird eine Luftleitung von dem Innenraum 110 zu dem Aufnahmeraum 116 bereitgestellt, wodurch insbesondere der Druck in dem Aufnahmeraum 116 im Wesentlichen dem Druck in dem Innenraum 110 entspricht. Überschreitet nun der Druck in dem Innenraum 110 einen vorbestimmten Maximaldruck, so wird die Sekundärdichtlippe 103 elastisch nach oben bzw. im Wesentlichen in positive Radialrichtung R weggebogen und es entsteht ein Entlüftungsweg über den Verbindungsdurchbruch 104, den Aufnahmeraum 116 sowie vorbei an der Sekundärdichtlippe 103. Über diesen Entlüftungsweg kann Luft aus dem Innenraum 110 nach außen gelangen, bis der Druck in dem Innenraum 110 nicht mehr über dem vorbestimmten Maximaldruck liegt. Sobald der Druck in dem Innenraum 110 nicht mehr über dem Maximaldruck liegt, schließt die Sekundärdichtlippe 103 wieder an die Nabenkappe 2 an und der Entlüftungsweg ist wieder geschlossen. In diesem Zustand können insbesondere aufgrund des Dichtrings 101 und aufgrund der Dichtlippen 102, 103 kein Schmutz und keine Flüssigkeiten in den Innenraum 110 gelangen.

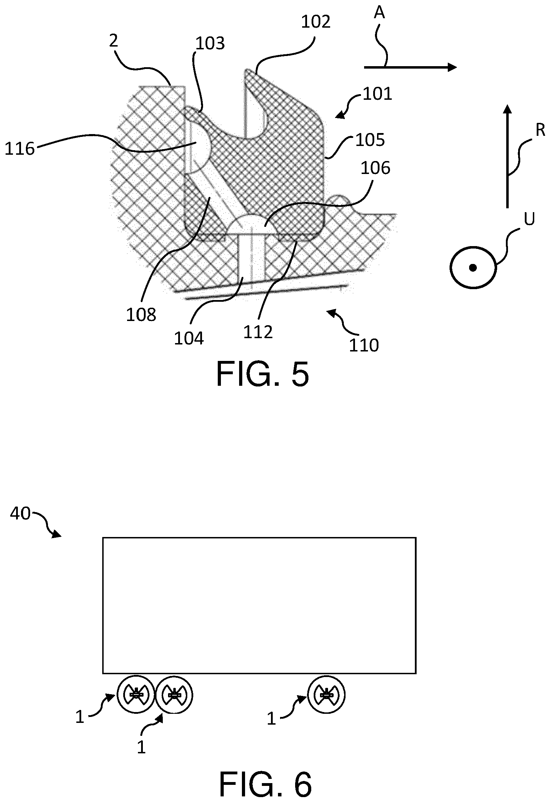

Die **Figuren 4** **und** **5** zeigen eine Schnittansicht eines Dichtrings 101, der an einer Nabenkappe 2 angeordnet ist, welche hier ausschnittsweise gezeigt ist. Auch in dieser Ausführungsform weist der Dichtring 101 eine Primärdichtlippe 102 und eine Sekundärdichtlippe 103 sowie einen Haltebereich 105 auf. Die Dichtlippe 101 weist in dieser Ausführungsform zudem in Umlaufrichtung U einen oder mehrere Durchbrüche 108 auf, von denen einer in dieser Schnittansicht zu sehen ist. Der Durchbruch 108 verläuft sowohl in Radialrichtung R als auch in Axialrichtung A. Er verbindet damit einen Kanal 106, welcher in einer Bodenfläche 112 des Dichtrings 101 angeordnet ist, mit dem Aufnahmeraum 116, der hier genauso ausgestaltet ist wie in der ersten Ausführungsform, die in den Figuren 2 und 3 gezeigt ist. Sowohl der Kanal 106 als auch der Aufnahmeraum 116 weisen in Umlaufrichtung U einen konstanten Querschnitt auf. Beide sind somit durchgehend ausgebildet und werden punktuell durch die Durchbrüche 108 verbunden. Zur Verbindung des Kanals 106 mit dem Innenraum 110 weist die Nabenkappe 2 zumindest einen Verbindungsdurchbruch 104 auf. Über den Verbindungsdurchbruch 104, den Kanal 106, den Durchbruch 108 sowie den Aufnahmeraum 116 kann ein Entlüftungsweg geöffnet werden, wenn die Sekundärdichtlippe 103 bei Überdruck in dem Innenraum 110 und damit auch in dem Aufnahmeraum 116 elastisch zurückgebogen wird. Unterhalb eines nominellen Druckwerts schließt die Sekundärdichtlippe hingegen durch Anliegen an die Nabenkappe 2, während die Primärdichtlippe 102 durch Anliegen an eine hier nicht gezeigte angeschlossene Radnabe ebenfalls den Innenraum 110 abdichtet. Damit kann der Dichtring 101 bei einem zusammengebauten System aus Nabenkappe 2, Radnabe und Dichtring 101 dafür sorgen, dass keine Fremdkörper von außen in die Radnabe bzw. in ein die Radnabe umfassendes Rad gelangen können.

Die **Figur 6** zeigt ein Fahrzeug 40, wobei dieses Fahrzeug 40 mehrere Nabenkappensysteme 1 an seinen Rädern umfasst. Die Nabenkappensysteme 1 können insbesondere in einer erfindungsgemäßen Ausführungsform vorgesehen sein. Die Nabenkappensysteme 1 können Teil eines erfindungsgemäßen Radkappensystems sein und/oder einen erfindungsgemäßen Dichtring 101 umfassen. Das Fahrzeug 40 ist in diesem Fall ein Anhänger. Auch eine Kombination aus verschiedenen Ausführungsformen von Nabenkappensystemen an verschiedenen Rädern und/oder Achsen des Fahrzeugs 40 ist denkbar.

### Bezugszeichen:

- 1: Nabenkappensystem
- 2: Nabenkappe
- 40: Fahrzeug
- 101: Dichtring
- 102: Primärdichtlippe
- 103: Sekundärdichtlippe
- 104: Verbindungsdurchbruch
- 105: Haltebereich
- 106: Kanal
- 108: Durchbruch
- 110: Innenraum
- 112: Bodenfläche
- 114: Befestigungsmittel
- 116: Aufnahmeraum
- A: Axialrichtung
- R: Radialrichtung
- U: Umlaufrichtung

## Patentansprüche

1. Nabenkappensystem zur Befestigung an einer Radnabe eines Fahrzeugs (40), insbesondere Nutzfahrzeugs,
umfassend eine Nabenkappe (2) und einen Dichtring (101)
wobei der Dichtring (101) einen Haltebereich (105) zur Befestigung an der Radnabe, eine Primärdichtlippe (102) zur Anlage an der Radnabe und eine Sekundärdichtlippe (103) welche an der Nabenkappe anliegt umfasst,
wobei der Haltebereich (105) umlaufend um eine Axialrichtung (A) ausgebildet ist,
wobei der Haltebereich (105) eine Bodenfläche (112) aufweist,
wobei eine Radialrichtung (R) sich radial und senkrecht von der Axialrichtung (A) weg erstreckt,
wobei die Primärdichtlippe (102) und die Sekundärdichtlippe (103) eine Erstreckung in Radialrichtung (R), insbesondere in positive Radialrichtung (R), aufweisen, **dadurch gekennzeichnet, dass** in der Bodenfläche (112) ein um die Axialrichtung (A) umlaufender Kanal (106) ausgebildet ist.

2. Nabenkappensystem gemäß Anspruch 1,
wobei eine Richtung der Erstreckung der Primärdichtlippe (102) und der Sekundärdichtlippe (103) von ihrem Ansatz an dem Haltebereich (105) bis zu ihrem distalen Ende bemessen wird.

3. Nabenkappensystem gemäß einem der vorhergehenden Ansprüche,
wobei zwischen der Sekundärdichtlippe (103) und dem Haltebereich (105) ein Aufnahmeraum (116) vorgesehen ist,
wobei der Aufnahmeraum (116) vorteilhafterweise, insbesondere rotationssymmetrisch, um die Axialrichtung (A) umlaufend ausgebildet ist.

4. Nabenkappensystem gemäß einem der vorhergehenden Ansprüche,
wobei die Primärdichtlippe (102) und/oder die Sekundärdichtlippe (103) sich in Axialrichtung (A) und in die Radialrichtung (R) erstrecken.

5. Nabenkappensystem gemäß einem der vorhergehenden Ansprüche,
wobei die Primärdichtlippe (102) und die Sekundärdichtlippe (103) gleichgerichtet erstreckend ausgebildet sind.

6. Nabenkappensystem gemäß einem der vorhergehenden Ansprüche, wobei der Dichtring (101) einen Durchbruch (108) aufweist.

7. Nabenkappensystem gemäß Anspruch 6,
wobei der Durchbruch (108) in die Bodenfläche (112) oder den Kanal (106) mündet.

8. Nabenkappensystem gemäß Anspruch 6 oder 7,
wobei der Durchbruch (108) in den Aufnahmeraum (116) mündet.

9. Nabenkappensystem gemäß einem der vorhergehenden Ansprüche,
wobei die Nabenkappe (2) einen Befestigungsbereich, insbesondere eine Nut, aufweist,
wobei der Befestigungsbereich vorteilhafterweise um die Axialrichtung (A) umlaufend ist, und/oder
wobei der Befestigungsbereich vorteilhafterweise wegweisend von der Axialrichtung (A) ausgebildet ist, und
wobei der Dichtring (101) an oder in dem Befestigungsbereich angeordnet ist.

10. Nabenkappensystem gemäß einem der vorhergehenden Ansprüche,
wobei die Nabenkappe (2) einen Innenraum (110) aufweist,
wobei die Nabenkappe (2) insbesondere zumindest einen Verbindungsdurchbruch (104) aufweist,
wobei der Verbindungsdurchbruch (104) den Durchbruch (104), den Kanal (106) oder den Aufnahmeraum (116) mit dem Innenraum (110) verbinden kann.

11. Nabenkappensystem gemäß einem der vorhergehenden Ansprüche,
wobei die Sekundärdichtlippe (103) an der Nabenkappe (2) anliegt oder anlegbar ist.

12. Radkappensystem umfassend eine Radnabe und ein Nabenkappensystem gemäß einem der vorhergehenden Ansprüche,
wobei die Primärdichtlippe (102) an der Radnabe anliegt oder anlegbar ist.

13. Fahrzeug (40), insbesondere Nutzfahrzeug, umfassend ein Nabenkappensystem gemäß einem der Ansprüche 1 bis 11.

## Claims

1. Hub cap system for fastening to a wheel hub of a vehicle (40), in particular a commercial vehicle,
comprising a hub cap (2) and a sealing ring (101)
wherein the sealing ring (101) comprises a retaining region (105) for fastening to the wheel hub, a primary sealing lip (102) for bearing against the wheel hub and a secondary sealing lip (103) which bears against the hub cap,
wherein the retaining region (105) is formed circumferentially around an axial direction (A),
wherein the retaining region (105) has a bottom surface (112),
wherein a radial direction (R) extends radially and perpendicularly away from the axial direction (A),
wherein the primary sealing lip (102) and the secondary sealing lip (103) have an extension in the radial direction (R), in particular in the positive radial direction (R), **characterized in that** a channel (106) running around the axial direction (A) is formed in the bottom surface (112).

2. Hub cap system according to claim 1,
wherein a direction of extension of the primary sealing lip (102) and the secondary sealing lip (103) is dimensioned from its shoulder to the retaining region (105) to its distal end.

3. Hub cap system according to any of the preceding claims,
wherein a receiving space (116) is provided between the secondary sealing lip (103) and the retaining region (105),
wherein the receiving space (116) is advantageously, in particular rotationally symmetrical, designed circumferential around the axial direction (A).

4. Hub cap system according to any of the preceding claims,
wherein the primary sealing lip (102) and/or the secondary sealing lip (103) extend in the axial direction (A) and in the radial direction (R).

5. Hub cap system according to any of the preceding claims,
wherein the primary sealing lip (102) and the secondary sealing lip (103) are designed to extend in the same direction.

6. Hub cap system according to any of the preceding claims,
wherein the sealing ring (101) has an aperture (108).

7. Hub cap system according to claim 6,
wherein the aperture (108) opens into the bottom surface (112) or the channel (106).

8. Hub cap system according to claim 6 or 7,
wherein the aperture (108) opens into the receiving space (116).

9. Hub cap system according to any of the preceding claims,
wherein the hub cap (2) has a fastening area, in particular a groove,
wherein the fastening area is advantageously circumferential around the axial direction (A), and/or
wherein the fastening area is advantageously formed pointing away from the axial direction (A), and
wherein the sealing ring (101) is arranged on or in the fastening area.

10. Hub cap system according to any of the preceding claims,
wherein the hub cap (2) has an interior space (110),
wherein the hub cap (2) in particular has at least one connecting aperture (104),
wherein the connecting aperture (104) can connect the aperture (104), the channel (106) or the receiving space (116) to the interior space (110).

11. Hub cap system according to any of the preceding claims,
wherein the secondary sealing lip (103) bears against or is bearable against the hub cap (2).

12. Wheel cap system comprising a wheel hub and a hub cap system according to any of the preceding claims,
wherein the primary sealing lip (102) bears against or is bearable against the wheel hub.

13. Vehicle (40), in particular commercial vehicle, comprising a hub cap system according to any of claims 1 to 11.

## Revendications

1. Système de chapeau de moyeu destiné à être fixé à un moyeu de roue d'un véhicule (40), en particulier d'un véhicule utilitaire, comprenant un chapeau de moyeu (2) et un anneau d'étanchéité (101),
l'anneau d'étanchéité (101) comprenant une zone de retenue (105) destinée à être fixée au moyeu de roue, une lèvre d'étanchéité primaire (102) destinée à venir en appui contre le moyeu de roue, et une lèvre d'étanchéité secondaire (103) qui s'appuie contre le chapeau de moyeu,
la zone de retenue (105) étant réalisée de manière périphérique autour d'une direction axiale (A),
la zone de retenue (105) présentant une surface de fond (112),
une direction radiale (R) s'étendant radialement et perpendiculairement à la direction axiale (A),
la lèvre d'étanchéité primaire (102) et la lèvre d'étanchéité secondaire (103) présentant une extension dans la direction radiale (R), en particulier dans la direction radiale positive (R),
**caractérisé en ce qu'**un canal (106) périphérique autour de la direction axiale (A) est formé dans la surface de fond (112).

2. Système de chapeau de moyeu selon la revendication 1,
dans lequel une direction d'extension de la lèvre d'étanchéité primaire (102) et de la lèvre d'étanchéité secondaire (103) est dimensionnée à partir de leur point de départ de la zone de retenue (105) jusqu'à leur extrémité distale.

3. Système de chapeau de moyeu selon l'une des revendications précédentes,
dans lequel un espace de réception (116) est prévu entre la lèvre d'étanchéité secondaire (103) et la zone de retenue (105),
l'espace de réception (116) étant avantageusement réalisé de manière périphérique autour de la direction axiale (A), en particulier à symétrie de révolution.

4. Système de chapeau de moyeu selon l'une des revendications précédentes,
dans lequel la lèvre d'étanchéité primaire (102) et/ou la lèvre d'étanchéité secondaire (103) s'étende(nt) dans la direction axiale (A) et dans la direction radiale (R).

5. Système de chapeau de moyeu selon l'une des revendications précédentes,
dans lequel la lèvre d'étanchéité primaire (102) et la lèvre d'étanchéité secondaire (103) sont réalisées de manière à s'étendre dans le même sens.

6. Système de chapeau de moyeu selon l'une des revendications précédentes,
dans lequel l'anneau d'étanchéité (101) présente une traversée (108).

7. Système de chapeau de moyeu selon la revendication 6,
dans lequel la traversée (108) débouche dans la surface de fond (112) ou dans le canal (106).

8. Système de chapeau de moyeu selon la revendication 6 ou 7,
dans lequel la traversée (108) débouche dans l'espace de réception (116).

9. Système de chapeau de moyeu selon l'une des revendications précédentes,
dans lequel le chapeau de moyeu (2) comprend une zone de fixation, en particulier une rainure,
la zone de fixation est avantageusement périphérique autour de la direction axiale (A), et/ou
la zone de fixation est avantageusement réalisée de manière à être détournée de la direction axiale (A), et
l'anneau d'étanchéité (101) est disposé sur ou dans la zone de fixation.

10. Système de chapeau de moyeu selon l'une des revendications précédentes,
dans lequel le chapeau de moyeu (2) présente un espace intérieur (110),
le chapeau de moyeu (2) présente en particulier au moins une traversée de communication (104),
la traversée de communication (104) est apte à relier la traversée (104), le canal (106) ou l'espace de réception (116) à l'espace intérieur (110).

11. Système de chapeau de moyeu selon l'une des revendications précédentes,
dans lequel la lèvre d'étanchéité secondaire (103) s'appuie ou peut venir s'appuyer contre le chapeau de moyeu (2).

12. Système de chapeau de roue comprenant un moyeu de roue et un système de chapeau de moyeu selon l'une des revendications précédentes, dans lequel la lèvre d'étanchéité primaire (102) s'appuie ou peut venir s'appuyer contre le moyeu de roue.

13. Véhicule (40), en particulier véhicule utilitaire, comprenant un système de chapeau de moyeu selon l'une des revendications 1 à 11.
